(19) Europäisches Patentamt

European Patent Office

Office européen des brevets

(11) **EP 4 681 827 A1**

(12) **EUROPEAN PATENT APPLICATION**

(43) Date of publication:
**21.01.2026 Bulletin 2026/04**

(21) Application number: 25188411.0

(22) Date of filing: **09.07.2025**

(51) International Patent Classification (IPC):
**B06B 1/04** *(2006.01)*   **G01H 11/00** *(2006.01)*
**A01M 29/16** *(2011.01)*   **G01H 11/02** *(2006.01)*
**G10K 9/13** *(2006.01)*

(52) Cooperative Patent Classification (CPC):
**B06B 1/045; A01M 29/16; G01H 11/02; G10K 9/13**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.07.2024 IT 202400016627**

(71) Applicant: **Entomolink S.r.l.**
**27043 Broni (PV) (IT)**

(72) Inventor: **ROGLEDI, Nicola**
**27043 Broni (PV) (IT)**

(74) Representative: **Faggioni, Carlo Maria et al**
**Fumero S.r.l.**
**Pettenkoferstrasse 20/22**
**80336 München (DE)**

(54) **VIBRATION SENSOR SYSTEM AND RELATED METHOD**

(57)   A method for preventing infestations by insect pests and a related vibration sensor system are disclosed, comprising
a transducer/sensor arranged to be placed in contact with a vibration-transmitting substrate,
an electrical control section of said transducer/sensor, and
a logic processing section for processing data received from and transmitted to said control section,
characterized in that said transducer/sensor comprises a solenoid (S) and a magnet (MA) with a magnetic field linked to said solenoid (S), reciprocally movable along a vibration axis,
a vibrating diaphragm (ME) integral with said solenoid (S), forming a loudspeaker configuration, said vibrating diaphragm (ME) being fixed to a housing casing (B) in which said solenoid (S) and magnet (MA) are also accommodated,
a calibrated mass (C), applied to said diaphragm (ME), which can be tuned to define a desired operating frequency of said transducer/sensor in the range from 80 Hz to 2000 Hz, and further comprising
an base cap (Z) acting as a damper/sound absorber and applied on the side of said diaphragm (ME) where said calibrated mass (C) is applied, said inner cap (Z) being provided with an internal cavity (Z1) in which said calibrated mass (C) is housed,
an optional outer cap (F), sound-absorbing and protective against external physical agents, arranged above said base cap (Z),
said base cap (Z) and outer cap (F) being configured to shield sound waves outside the range from 80 Hz to 2000 Hz.

**Fig. 2**

**Description**

FIELD OF THE INVENTION

The present invention relates to a vibration sensor system and related method, particularly suitable for detecting and transmitting selective vibrational communication signals of insects.

BACKGROUND OF THE PRIOR ART

It is well known that certain animal species communicate with each other by means of vibrational signals, that is, signals transmitted by exploiting the vibrations of a substrate. Typically, some insects communicate through vibrations transmitted via the tree leaves and branches on which they are positioned.

This communication technique has been studied with the aim of interfering with the behavior of certain harmful animals and preventing them from causing damage to agriculture. For example, the documents Anna Eriksson "Mating disruption in Scaphoideus titanus Ball (Hemiptera: Cicadellidae) by vibrational signals"; Doctoral thesis, University of Pisa; or else Jernej Polajnar, Anna Eriksson, Marco Valerio, Rossi Stacconi, Andrea Lucchi, Gianfranco Anfora, Meta Virant-Doberlet, Valerio Mazzoni "The process of pair formation mediated by substrate-borne vibrations in a small insect"; Elsevier; and else Mazzoni, V., Lucchi, A. "Dieci anni di studi sulla comunicazione vibrazionale in Scaphoideus titanus: dalla teoria alla pratica"; Proceedings of the Italian National Academy of Entomology; Reviews, 62: 209-214, disclose various scientific studies directed to this type of analysis of vibrational communications of harmful insects (in particular Scaphoideus titanus, which has detrimental effects on grapevines) and to potential methodologies that would allow interference with the reproductive capacity of these insects.

These studies highlight the potential of these vibrational communication methods, while noting that there are technological challenges in putting them into practice. In order to detect vibrational signals, in some cases the use of laser interferometry is suggested; however, this is only feasible in laboratory settings and not in the field.

In the publication by Nieri, R., Michael, S.C.J., Pinto, C.F., Urquizo, O.N., Appel, H.M., Cocroft, R.B. (2022); "Inexpensive Methods for Detecting and Reproducing Substrate-Borne Vibrations: Advantages and Limitations"; In: Hill, P.S.M., Mazzoni, V., Stritih-Peljhan, N., Virant-Doberlet, M., Wessel, A. (eds) Biotremology: Physiology, Ecology, and Evolution. Animal Signals and Communication, vol. 8, Springer, signal processing techniques are provided that make it possible to obtain useful information even without the use of particularly sophisticated and expensive equipment and sensors.

CN 116 773 006 discloses techniques for detecting insects using array antennas and piezoelectric detectors. However, piezo sensors are noisy (high impedance) and are not suitable for outdoor environments because they tend to oxidize.

Electromechanical vibration sensors are also known, but to date have not been configured in a manner suitable for correctly and selectively detecting these vibrational signals. An example of a vibration sensor is disclosed in US2010/0175476.

JP 2023 133216 describes a generic vibration sensor designed to transmit and receive vibrations through a facial bone. The configuration is optimized to detect the speech sound band, typically above 1 kHz; being particularly lightweight, it is not suitable for detecting very low frequencies. Furthermore, immunity to external disturbances is achieved by directly coupling a vibrating diaphragm to the bone, which makes it unsuitable for agricultural use.

PROBLEM AND SOLUTION

The underlying problem addressed by the invention is to provide a system equipped with a magneto-electric vibration signal sensor that enables the selective detection and reproduction of low-frequency vibrational communications of insects, which is compact and cost-effective, suitable for field use, and sufficiently immune to disturbances caused by other vibrations.

These scopes are achieved by means of the features described in essential terms in the appended claims.

BRIEF DESCRIPTION OF THE DRAWINGS

Further features and advantages of the invention will become more apparent from the following detailed description of a preferred embodiment, provided purely by way of non-limiting example and illustrated in the accompanying drawings, wherein:

Fig. 1 is a block diagram of the components of the system according to the invention;
Fig. 2 is a longitudinal sectional view of an exemplary transducer/sensor according to the invention;

Figs. 3A and 3B are photographic views of some prototype transducers/sensors;

Fig. 4 shows impedance graphs of two exemplary sensors;

Figs. 5A-5D are schematic diagrams of exemplary amplification sections;

Figs. 6A and 6B are exemplary circuit diagrams of the system according to the invention; and

Fig. 7 is a block diagram of a method of operation of the system according to the invention.

DETAILED DESCRIPTION OF A PREFERRED EMBODIMENT

The device according to the invention is intended to exploit vibrational communication among insects, a communication method adopted by many insects to communicate with each other, in order to obtain useful information for preventive action against pests or to interfere in some way with their behavior for the benefit of agriculture.

This method involves the transmission and reception of information through "substrate-borne vibrations," also referred to as surface waves, in particular those low-frequency vibrations typical of insects.

A sensor device is preferably configured to have two different modes of operation:

1. a passive mode: the device is capable of detecting the communicative activity of insects and providing statistics on the population present in the area under examination; in this mode, the device selectively detects the vibrations produced by insects in order to provide reliable information regarding their presence and activity;

2. an interactive mode: the device allows for active interaction with a specific target insect, for example, "Scaphoideus titanus"; in this mode, the device is capable of reproducing the vibrations produced by the target insect in order to communicate with it and control its behavior; in this way, it is possible to prevent the spread of infection and protect host plants from potential damage.

This innovative approach to vibrational communication can be adapted to different conditions and crops, offering a wide range of possibilities for the protection of agricultural crops. Thanks to this flexibility, the device can represent an effective and versatile solution for counteracting insect infestations and preventing crop damage.

To implement the two operating modes of the device, a sensor must be appropriately configured to detect the vibrations produced by insects, along with electronic circuitry specifically designed for the sensor.

For the passive mode, a method of recording signals in digital format is also provided, so that the information collected by the sensor can be analyzed and statistics on the insect population present can be generated.

For the interactive mode, a microcontroller is provided, programmed with an algorithm "trained" on the communication protocol of the target insect. In this way, the microcontroller is capable of actively interacting with the insect and controlling its behavior, following a precise communication protocol. Thanks to these components, the device is able to offer high performance and adapt to different conditions and requirements.

The device according to the invention comprises:

a transducer/sensor, which is the component capable of converting an electrical signal into a mechanical vibration and vice versa,

a control section, which includes RTX amplifiers and analog and digital converters, allowing control of the signal transmitted to the vibration sensor both in reception and in transmission,

as well as a logic processing section in which a data processing procedure is implemented, capable of recognizing specific patterns of the detected vibrational signal, in order to determine the presence of a specific insect or to simulate corresponding vibrational output signals.

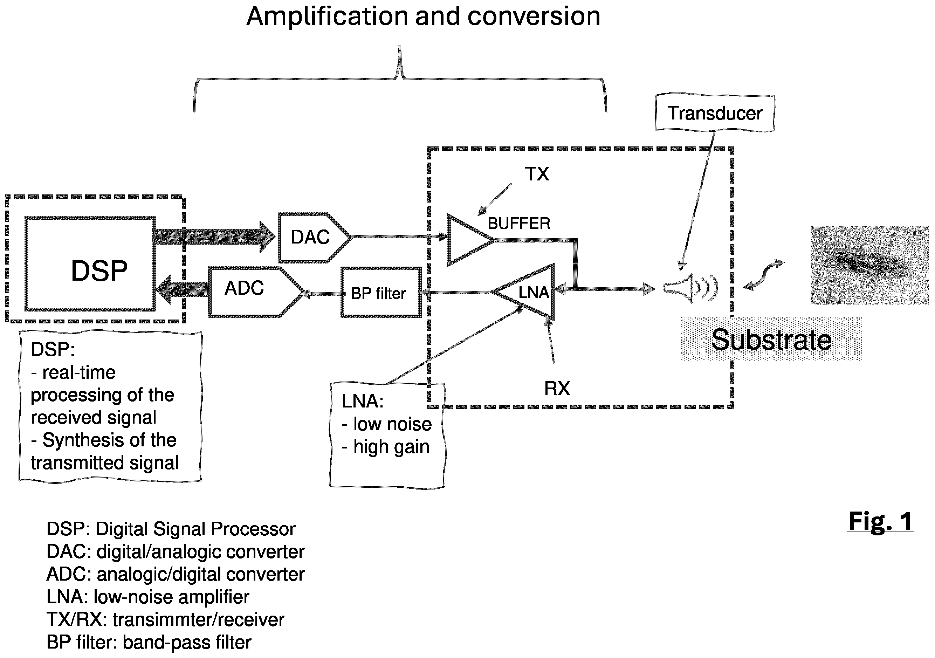

With reference to Fig. 1, on the right side, a transducer/sensor is schematically shown acquiring vibrations from a natural substrate, for example, a leaf or a branch of a plant. The transducer is connected to a backward LNA amplification section which amplifies the detected signal towards a band-pass filter BP. Downstream of the band-pass filter BP, an analog-to-digital converter ADC is provided, which supplies the detected signal in digital form to a digital signal processor DSP.

In the reverse mode, the forward transmission signal is generated by the processor DSP, then converted by a digital-to-analog converter DAC, which presents it to a buffer amplifier that in turn supplies it to a transducer input port, which produces a mechanical vibrational movement on the substrate.

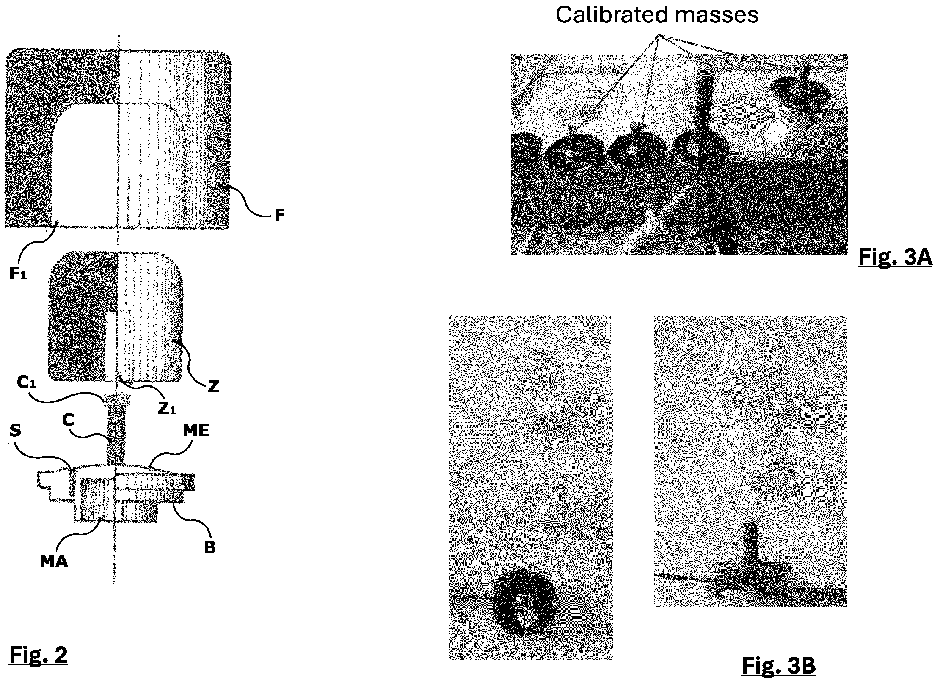

It has been observed that the configuration adopted by the signal transducer is essential for the proper functioning of the proposed solution. In Fig. 2, an exemplary transducer/sensor is schematically illustrated.

At the base of the transducer (Fig. 2), there is provided a coil or solenoid S and a magnet MA with a magnetic field linked to the solenoid S, reciprocally movable along a vibration axis. The solenoid S is integral with a vibrating diaphragm ME which, together with the magnet MA, constitutes a classic loudspeaker-type construction. The diaphragm ME is fixed to a housing casing B in which the solenoid S and magnet MA are also accommodated.

According to the invention, on the vibrating symmetry axis of the diaphragm ME, a replaceable calibrated mass C is applied, which moves integrally with the diaphragm ME. The calibrated mass C may, for example, be about 10-15 g, but can be selected and then replaced according to the specific signal (i.e., insect) that needs to be acquired and/or reproduced.

On the exposed side of the diaphragm ME, to which the calibrated mass C is applied, there is arranged an base cap (Z) that acts as a damper/sound absorber for the surrounding sounds, which are a source of noise for the system.

The base cap Z may be made of foamed polyurethane, polystyrene, sound-absorbing sponge, or even cork (expensive but efficient), and is provided with an internal cavity $Z_1$ in which the calibrated mass C is inserted without interference. In this configuration, the base cap Z is attached directly to the housing casing B.

Above the base cap Z, an outer sound-absorbing cap F may be applied, made of rigid material (for example, produced by 3D printing), with the additional feature of providing protection against external mechanical agents such as impacts (for example, reptiles walking on the branch).

The outer cap F has a large internal cavity $F_1$ in which the base cap Z is bounded; in this configuration, the outer cap F is attached to the housing casing B, while the base cap Z is fixed to the outer cap F.

According to a preferred embodiment, a dissipative element $C_1$ may be applied (glued or welded) to the calibrated mass C, arranged in interference (in contact or sliding) with the internal cavity $Z_1$ of the base cap Z. The assembly of the diaphragm ME and the calibrated mass C constitutes the tunable element that determines the desired operating frequency of the transducer, while the dissipative element $C_1$ serves as the damping element of the resonant system.

The dissipative element $C_1$ is also selected based on the specific signal to be acquired (the greater the friction generated between $C_1$ and the cavity $Z_1$, the greater the damping effect on frequency peaks, resulting in a broadening of the band of interest).

The sound-absorbing caps F and Z are arranged to shield unwanted frequencies before they reach the resonant system and the amplification electronics. In particular, one or both caps are selected to attenuate as much as possible sound frequencies outside the range of interest: from a few tens of Hz up to about 2 kHz, for example from 80 Hz to 1800 Hz, thereby eliminating environmental disturbances.

This sound transducer configuration has proven to be particularly effective. Thanks to its construction, it is sufficiently selective with respect to the desired frequencies.

In particular, two measures have proven effective in achieving the desired selectivity:

-   a shielding, consisting of the base cap Z alone, which attenuates sounds arriving from the surrounding environment; in this configuration, the base cap Z is fixed (glued or fitted) to the housing casing B;
-   a shielding also provided with an optional outer cap F, which, in addition to attenuating sounds, provides mechanical protection; in this configuration, the outer cap F is rigidly fixed to the housing casing B (glued or fitted), and the base cap Z is fixed to the outer cap F (glued or fitted)
-   the calibrated mass C connected to the diaphragm ME, which, when appropriately dimensioned, constitutes an inertial element capable of being selective in frequency and thus filtering out low-frequency disturbances (for example, vibrations induced by wind).

Indeed, at very low frequencies, the calibrated mass C moves together with the system, preventing the transfer of the signal to the coil S (the coil and the magnet move as an integral unit).

It is considered that frequencies below 50-70 Hz are not significant for insect vibrational communication, while there is a certain likelihood of disturbances caused by wind in this range, which can therefore be eliminated.

At higher frequencies, the calibrated mass C remains stationary due to its inertia, and the diaphragm connecting it to the rest of the system acts as a decoupler: in this way, vibrations of the substrate on which the housing casing B is placed cause the magnet to move relative to the mass, generating an electromotive force (emf) induced in the solenoid S. At very high frequencies, the substrate acts as a natural filter that does not allow the passage of vibrations.

Laboratory measurements show that signals well above 1 kHz are naturally filtered by the wood of the branch to which the device is applied, typically grapevine wood; evidently, different substrates have different characteristics, but most tend to limit high frequencies.

The system operates as a band-pass filter, and the value of the calibrated mass C is selected based on the desired characteristic: the smaller the mass, the more easily low frequencies are neglected.

This is particularly useful since each insect has its own specific operating frequency.

The transducer also exploits the property of magnetic field reciprocity to implement a transceiver (RTX) function:

-   a variation in the magnetic field linked to the solenoid, due to a mechanical force transferred from the vibrating substrate, generates an induced electromotive force (emf) in the solenoid and thus a modulated current that is received as an analog signal;
-   a suitably modulated electric current entered into the solenoid generates a magnetic field that can exert a force on the magnet, which is transmitted as a vibration to the underlying substrate.

The mechanical component connected to the electromagnetic transducer is, in all respects, a "tuned" and "resonant" device. Its frequency characteristics are defined by the reactive components, which in this case are the mass of the magnet, the elastic constant of the diaphragm, and any resistive (dissipative) component.

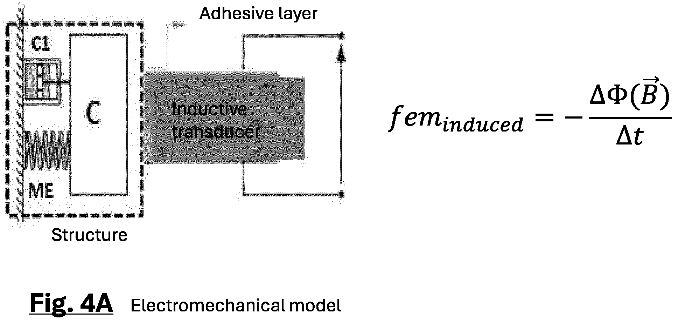

Fig. 4A illustrates the mechanical model in analogy with the sensor: the mass (C), the diaphragm (ME), and the damper ($C_1$) correspond respectively to a mass C, a spring with elastic constant ME, and a damper with friction coefficient $C_1$.

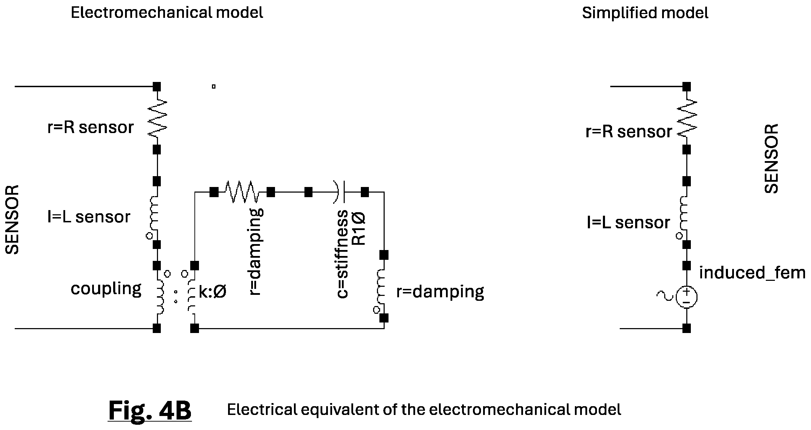

Fig. 4B illustrates the electrical equivalent of the electromechanical model in analogy with the mechanical model of Fig. 4A.

Fig. 4B also shows the simplified electrical model in which the equivalent mechanical component is neglected; due to its simplicity, this model is often used in subsequent representations for dimension calculations.

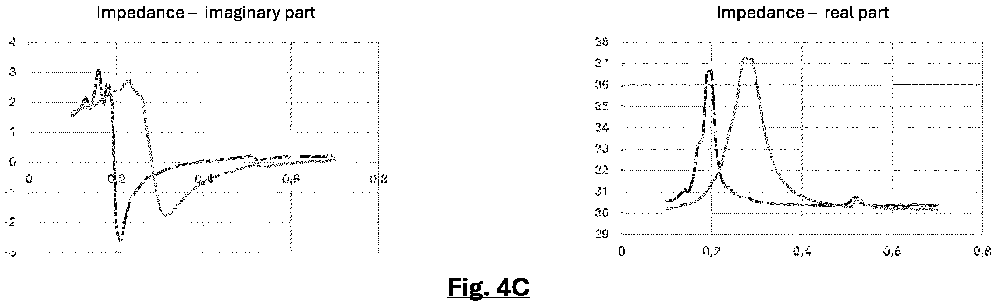

Fig. 4C shows the impedance (real and imaginary parts) of two different sensors appropriately tuned by properly selecting the calibrated mass C to receive two different frequencies. In particular, the sensor represented by the graph furthest to the left is tuned to receive and transmit the communication frequencies of Scaphoideus titanus. The frequency selection is achieved very precisely by selecting the resonant mass.

The transducer, typically of very small dimensions, for example with a diameter of a few centimeters, can be applied (for example, glued or otherwise fixed) to the substrate and thus detect or transmit the desired vibrations.

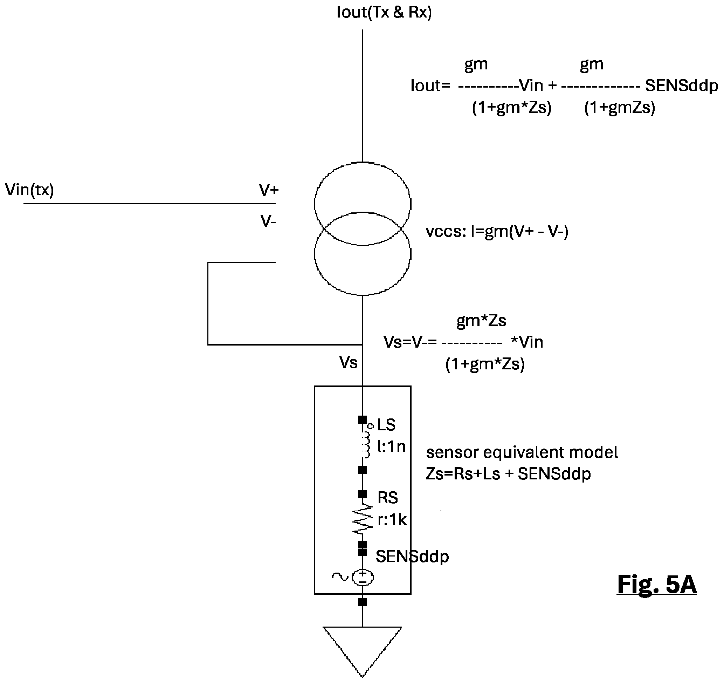

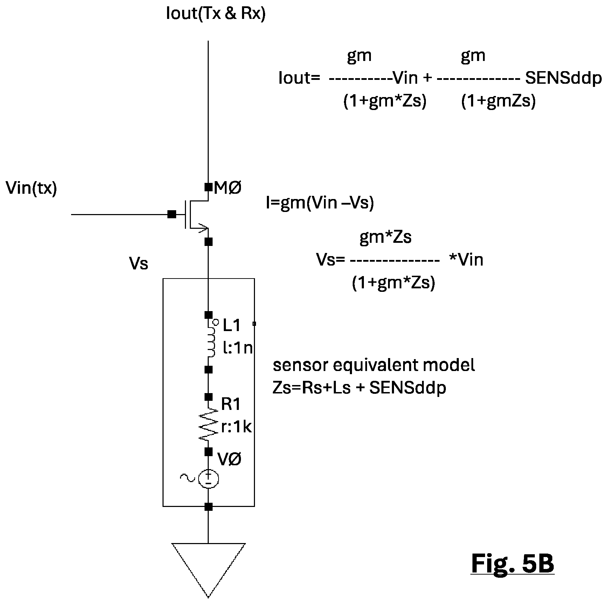

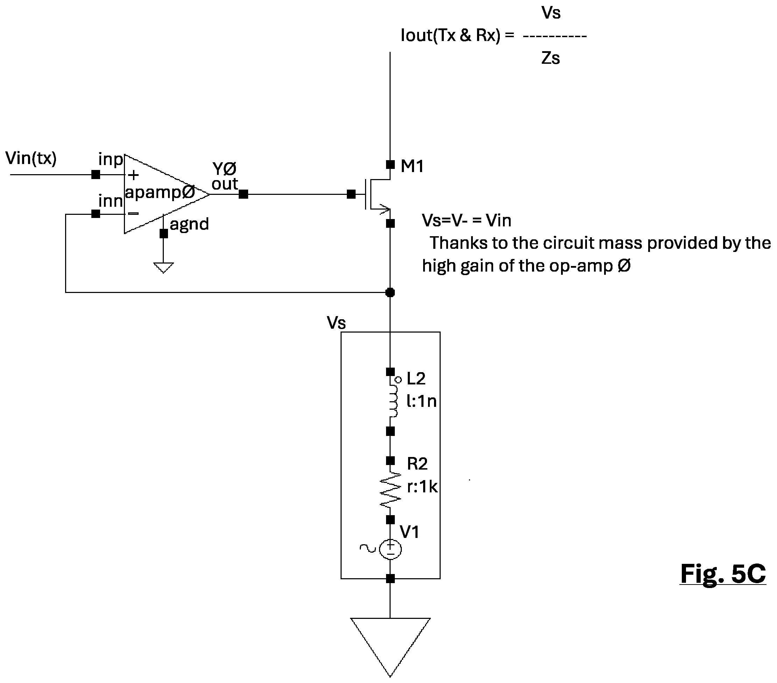

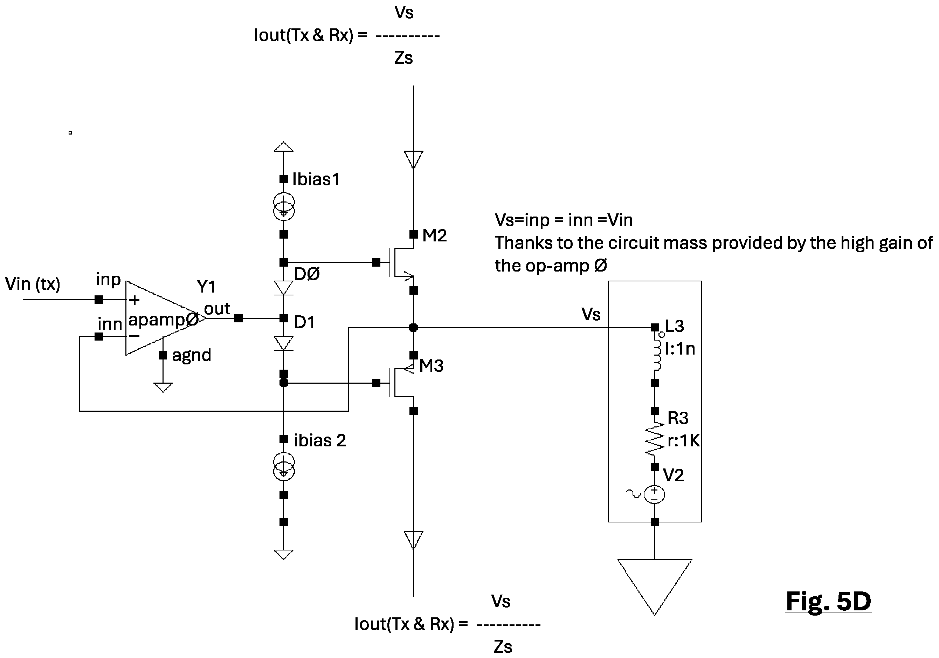

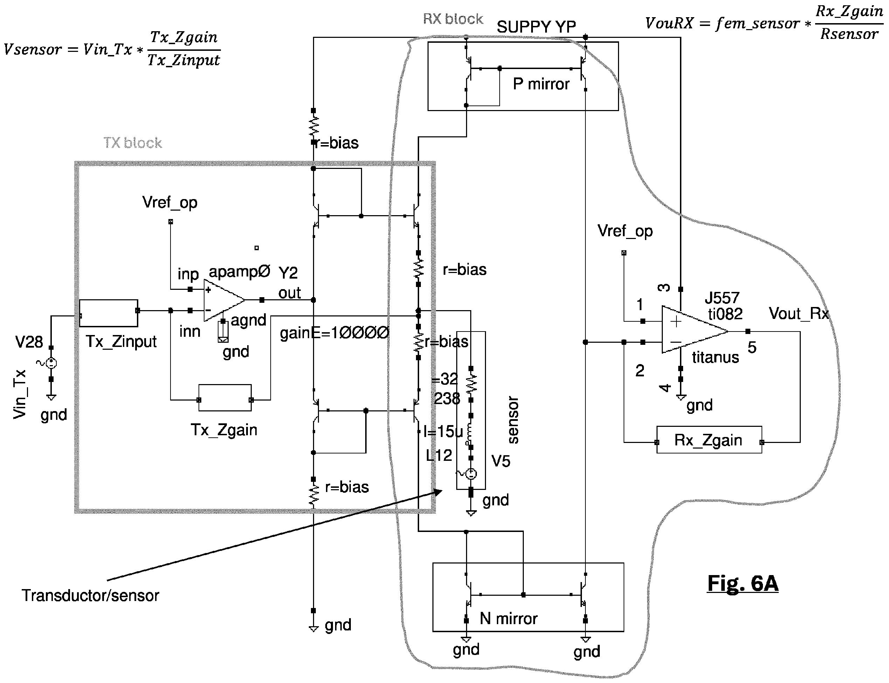

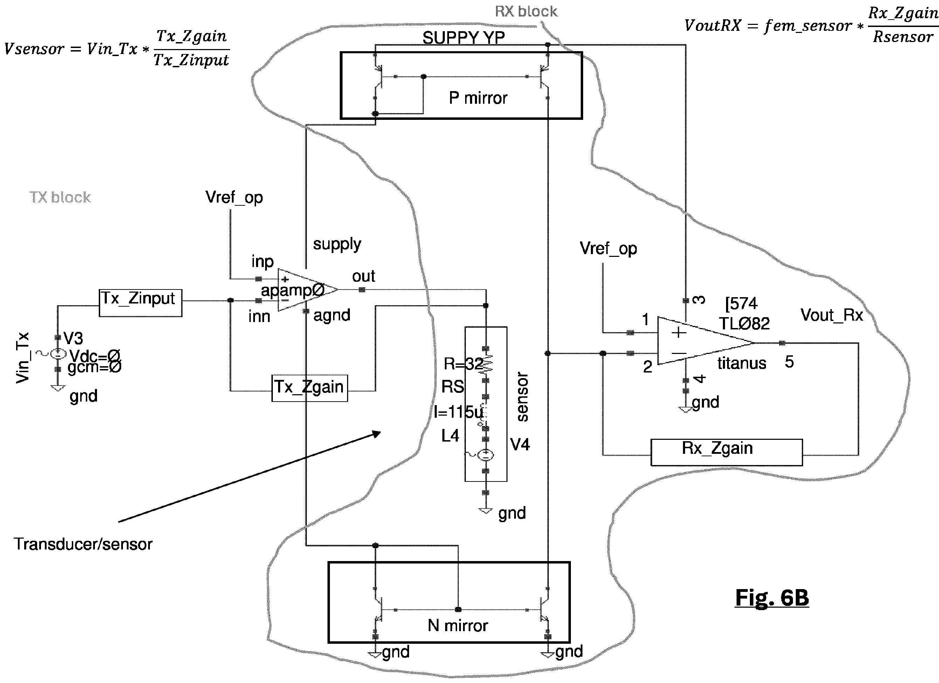

Figs. 5 and 6 illustrate a general diagram of the amplification section.

The amplifier is configured to use the sensor/transducer both in reception and in transmission, allowing signals to follow the same path and thus be easily correlated. The amplifier provides high precision, programmable gain, and low noise, ensuring high and reliable performance. The amplifier is capable of measuring the "mechanical impedances" of the medium to which the sensor is applied (this function is very useful for academic purposes as it allows for studies and considerations on the substrates, but for Scaphoideus it is not strictly necessary).

The amplifier section is preferably designed to meet two different requirements. On one hand, to enter an input voltage to the transmission transducer (Tx): in this way, the system is able to transform an electrical signal into a mechanical vibration, which is propagated from the sensor to the substrate. On the other hand, to detect the current generated by the magnetic sensor in the reception mode (Rx): in this way, the system is able to transform a mechanical excitation applied to the sensor (vibration) into an electrical current, which can be processed to obtain detailed information on the vibration spectrum and thus on the target insect or on the characteristics of the substrate in which the vibrations propagate. In principle, a voltage-controlled current source (VCCS) with negative voltage feedback can provide this function. In the simplest version, a source follower performs this function.

General Principle

The basic circuit is illustrated in Fig. 5A, which shows a voltage-controlled current source (VCCS) with negative feedback on the load:

$$V_{sensor} = V_{in} \texttt{ (thanks to the feedback) -> TX function}$$

$$I_{out} = I_{sensor} = \frac{induced\ emf}{R_{in}(resistance\ seen\ by\ the\ sensor)} \texttt{ in this case being } I_{sensor} =$$

$$\frac{emf}{\frac{1}{gm}+R_{sensor}} \texttt{ gm being = transconductance -> RX function}$$

The desired function is to force a voltage on the sensor to achieve conversion into vibrations (TX function) and/or to detect a current obtained from the electromagnetic induction produced by vibrations incident on the sensor (RX function). A context in which both TX and RX operations are applied to the same sensor is particularly advantageous because it is:

- cost-effective,
- simple,
- TX and RX signals follow the same path to and from the insect.

Figs. 5B-5D illustrate alternative circuits for the amplifier section.

Fig. 5B represents the simplest implementation of the general principle but with the following limitations:

limited precision in TX, as the input signal is not entirely converted into vibration due to the finite value of transconductance (gm);

limited ability to receive signals in RX: the emf induced in the solenoid by vibrations, in order to be efficiently converted into current, must see a low resistance at terminals as its load; the value of this resistance is determined by the transconductance provided by the amplifier (the resistance seen by the sensor is equal to 1/gm).

The configuration of Fig. 5C represents an improvement over the previous implementation, as it introduces a high-gain operational amplifier (OPAMP) connected in negative feedback. The high gain and feedback allow a precise voltage to be applied to the sensor (TX function); furthermore, the Rx function is also improved as it reduces the impedance seen by the sensor, allowing for a more precise conversion from emf induced in the sensor to current.

Fig. 5D represents a further evolution of the solution of Fig. 5C, utilizing a class AB output stage as opposed to the class A stage of Fig. 5C.

Figures 6A and 6B show two possible block diagrams for the implementation of the entire TRX system, with the two amplification sections.

Focusing on Fig. 6A, the following points are highlighted:

- The cooperation between the transmission (TX) section and the reception (RX) section, both connected to the same sensor.
- A mode of applying the transmission signal with gain adjustment: the signal to be transmitted, usually generated by a DAC of a microcontroller, has a magnitude (power) that is too high to be compatible with the vibrational signals of insects (several orders of magnitude difference). Thanks to the Tx Zgain and Tx Zinput components, it is possible to precisely control the transmitted signal (applied as a voltage to the sensor) so that it is compatible with the levels of the insects.
- The method of recovering and amplifying the current induced by the received signal is illustrated, using the P mirror and N mirror, followed by amplification through a current-to-voltage converter using an OPamp in negative feedback with Rx gain (together forming a current-to-voltage transconductance amplifier).
- The current-to-voltage conversion of the Rx amplifier is useful because the signal is detected by the microcontroller via a voltage ADC.

With reference to Fig. 6B, the aim is to simplify the implementation of Fig. 6A by exploiting the possible integrated implementation within the TX opamp of the components that realize the source follower of Fig. 6A (reducing component costs and PCB construction).

In the circuit section, a data storage section is also preferred, preferably downstream of the ADC converter section, which allows the sampled signals to be stored for subsequent downstream analysis.

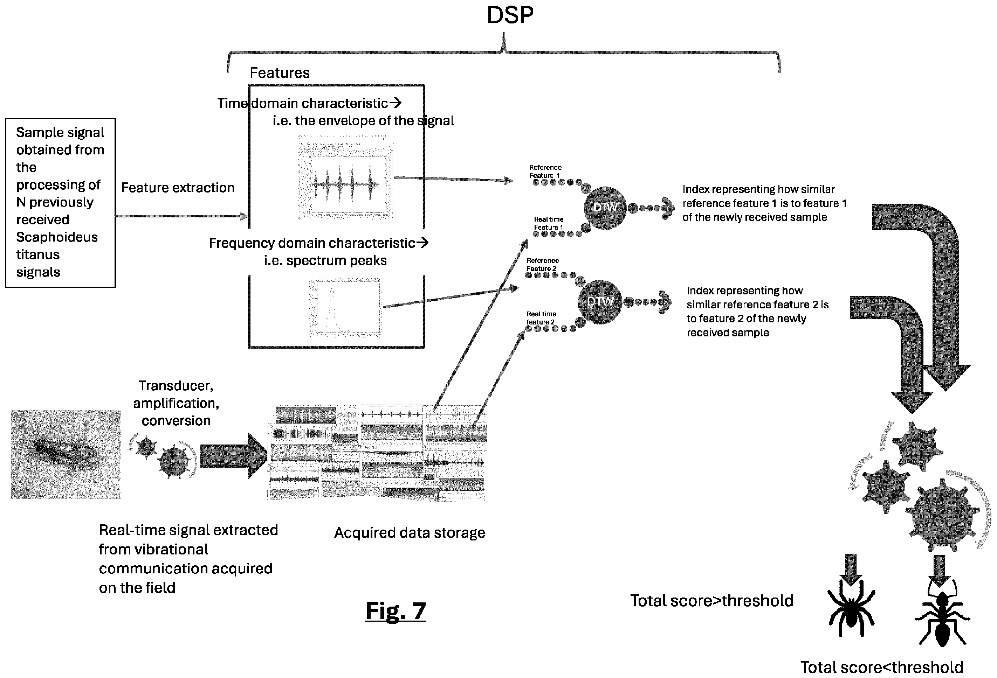

In particular, according to a preferred embodiment of the invention, a "patternMatching" analysis is performed on the acquired vibrational signal data, enabling the rapid identification of the presence of the insect to which the device is "tuned" (see Fig. 7).

The specific algorithm implemented on board the DSP, which is not the subject of the present invention and will therefore not be described in further detail, utilizes known systems such as FFT, DTW (Dynamic Time Warp), and digital filters to compare certain distinctive features extracted from known spectra of vibrations of the insects to be monitored (for example, Scaphoideus titanus) with the characteristics of the vibration spectra detected in real time on the field. The coincidence of these features, within established thresholds, leads the system to recognize the presence of the monitored insect and to determine the number of occurrences per unit of time, which is an important index for enabling agronomists, for example, to be promptly alerted of an increase in the population of a pest insect. Early warning of a population increase in a particular pest allows for more targeted intervention with protective or extermination measures, thereby minimizing the impact of these measures on other aspects of the agricultural environment.

This solution thus provides a portable early detection system based on the vibrational communication of insects, in order to help agronomists detect infestations before they spread. The system exploits the ability to intercept the vibrational communications of insects through the substrate, with the addition of a processing component on the stored data capable of comparing the signals received in real time with pre-recorded patterns in the internal memory and alerting the operator to the presence of an insect.

The fundamental assumption is that each insect species possesses unique and typical vibrational signals that allow for its identification. The distinctive properties of such vibrational signals manifest themselves both in the time domain and in the frequency domain and are referred to as "features."

The invention operates by means of a comparative analysis between the features previously extracted and statistically processed-which serve as a reference-and the signals detected and acquired by the hardware device in the field and analyzed in real time.

The result of the comparison, which can be expressed in terms of the frequency of occurrence over time of the typical vibrational signal of the monitored insect, may be displayed to the operator by means of output means, for example a display, a low-power radio frequency transmitter (Bluetooth, NFC, etc.), a USB port, or another low-consumption device. The display may also be a small screen that can be activated by pressing a local button, for example, manually operated by an operator during an inspection phase of a plurality of devices installed on the field.

The comparison between the features of the vibrational profiles is carried out through the use of a classifier, which may be based on maximum likelihood principles, advanced statistical methods, or both. The classification process assigns a score to each feature of the input signal, quantifying its correspondence with the characteristics of the stored model. The classifier may be a Bayesian or k-nearest neighbor (knn) classifier in the case of statistical methods, or a maximum likelihood classifier such as Dynamic Time Warp or Longest Common Subsequence.

As it is understood from the above description, the device of the invention fully achieves the objectives set forth in the preamble. In particular, by means of an optimally configured sensor/transducer-which can simply be placed in contact with the vibration-transmitting substrate-and an appropriate TRX amplification section, with corresponding data storage and processing sections, it is possible to provide a portable, easily field-installable, and low-power device that promptly provides useful information to agronomists for combating infestations of specific insects.

By detecting vibrational communications, it is possible to obtain useful information on the occurrence and frequency of presence of such insects. Through the reverse operation, that is, by transmitting selective vibrational signals on the substrate, it is potentially possible to interfere with communications between insects and modify their behavior, for example by inhibiting their reproduction or attracting them toward suitable traps.

It is understood, however, that the invention should not be considered limited to the particular arrangements described above, which constitute merely exemplary embodiments thereof, but that various modifications are possible, all within the reach of a person skilled in the art, without thereby departing from the scope of protection of the invention as defined by the following claims.

**Claims**

1. Vibration sensor system configured for vibrational communication with insects in the agricultural field, comprising

   a transducer/sensor arranged to be placed in contact with a vibration-transmitting substrate,
   an electrical control section of said transducer/sensor, and a logic processing section for processing data received from and transmitted to said control section,
   **characterized in that** said transducer/sensor comprises
   a solenoid (S) and a magnet (MA) with a magnetic field linked to said solenoid (S), reciprocally movable along a vibration axis,
   a vibrating diaphragm (ME) integral with said solenoid (S), forming a loudspeaker configuration, said vibrating diaphragm (ME) being fixed to a housing casing (B) in which said solenoid (S) and magnet (MA) are also accommodated,
   a calibrated mass (C), applied to said diaphragm (ME), which can be tuned to define a desired operating frequency of said transducer/sensor in the range from 80 Hz to 2000 Hz, and further comprising
   an base cap (Z) acting as a damper/sound absorber and applied on the side of said diaphragm (ME) where said calibrated mass (C) is applied, said base cap (Z) being provided with an internal cavity (Z1) in which said calibrated mass (C) is housed,
   an optional outer cap (F), sound-absorbing and protective against external physical agents, arranged above said base cap (Z),
   said base cap (Z) and outer cap (F) being configured to shield sound waves outside the range from 80 Hz to 2000 Hz.

2. Vibration sensor system as in claim 1, wherein there is further provided a damper (C1) integral with the calibrated mass (C) and arranged in interference with said internal cavity (Z1) of the base cap (Z).

3. Vibration sensor system as in claim 1 or 2, wherein said outer cap (F), fixed to the housing casing (B), is coupled to the base cap (Z) being made of a light, porous body without interference with said diaphragm (ME) into which said calibrated mass (C) is inserted.

4. Vibration sensor system as in claim 2, wherein said outer cap (F) has a large internal cavity (F1) in which said base cap (Z) is located.

5. Vibration sensor system as in any one of the preceding claims, wherein said electrical control section comprises at least a backward amplification section (LNA) which amplifies a vibration signal acquired by said transducer/sensor towards a band-pass filter (BP), downstream of which an analog-to-digital converter (ADC) is provided which supplies said acquired vibration signal in digital form to a signal processor (DSP) arranged in said logic processing section.

6. Vibration sensor system as in claim 5, wherein said signal processor (DSP) is configured to generate digital data representative of a vibration signal, and is arranged upstream of a digital-to-analog converter (DAC) connected to a buffer amplifier which is in turn electrically connected to said transducer/sensor.

7. Vibration sensor system as in any one of the preceding claims, wherein said logic data processing section further comprises a data storage section for storing sampled vibration signals.

8. Vibration sensor system as in claim 7, wherein said signal processor (DSP) is configured to perform a "patternMatching" analysis comparing said sampled vibration signals with predetermined characteristics of a reference spectrum of vibration signals.

9. Method for preventing insect pest infestation in the agricultural field, comprising the steps of

arranging a plurality of systems as in any one of the preceding claims,
tuning a transducer/sensor to a vibration signal typical of said insect pests,
acquiring and storing vibration profile data by means of said transducer/sensor and performing a comparison with pre-stored typical vibration profiles,
determining an occurrence of said insect pests from said comparison,
reporting a trend of said occurrence through output means.

Amplification and conversion

Transducer

TX

BUFFER

DSP

DAC

ADC

BP filter

LNA

RX

Substrate

DSP:
- real-time
processing of the
received signal
- Synthesis of the
transmitted signal

LNA:
- low noise
- high gain

DSP: Digital Signal Processor
DAC: digital/analogic converter
ADC: analogic/digital converter
LNA: low-noise amplifier
TX/RX: transimmter/receiver
BP filter: band-pass filter

**Fig. 1**

EP 4 681 827 A1

Fig. 3A

Calibrated masses

Fig. 3B

Fig. 2

Adhesive layer

C1

C

Inductive
transducer

ME

Structure

$$fem_{induced} = -\frac{\Delta\Phi(\vec{B})}{\Delta t}$$

**Fig. 4A**   Electromechanical model

Fig. 4B   Electrical equivalent of the electromechanical model

Impedance – imaginary part

Impedance – real part

EP 4 681 827 A1

**Fig. 4C**

Iout(Tx & Rx)

$$Iout = \dfrac{gm}{(1+gm*Zs)}Vin + \dfrac{gm}{(1+gmZs)}SENSddp$$

Vin(tx) ——————— V+

V-

vccs: I=gm(V+ - V-)

$$Vs=V-= \dfrac{gm*Zs}{(1+gm*Zs)}*Vin$$

Vs

LS
l:1n

sensor equivalent model
Zs=Rs+Ls + SENSddp

RS
r:1k

SENSddp

**<u>Fig. 5A</u>**

EP 4 681 827 A1

EP 4 681 827 A1

Iout(Tx & Rx)

$$Iout = \frac{gm}{(1+gm*Zs)}Vin + \frac{gm}{(1+gmZs)}SENSddp$$

Vin(tx)

MØ

$I = gm(Vin - Vs)$

$$Vs = \frac{gm*Zs}{(1+gm*Zs)}*Vin$$

Vs

L1
l:1n

sensor equivalent model
Zs=Rs+Ls + SENSddp

R1
r:1k

VØ

**Fig. 5B**

$$Iout(Tx \& Rx) = \frac{Vs}{Zs}$$

Vin(tx)

inp

YØ
out

M1

+

apampØ

inn

−

agnd

Vs=V− = Vin
  Thanks to the circuit mass provided by the
high gain of the op-amp Ø

Vs

L2
l:1n

R2
r:1k

V1

**Fig. 5C**

Fig. 5D

$$Iout(Tx \& Rx) = \frac{Vs}{Zs}$$

Ibias1

M2

Vs = inp = inn = Vin
Thanks to the circuit mass provided by the high gain of the op-amp Ø

Vin (tx)

inp
inn

Y1

out

apampØ

agnd

DØ

D1

Vs

L3
l:1n

R3
r:1K

V2

M3

ibias 2

$$Iout(Tx \& Rx) = \frac{Vs}{Zs}$$

EP 4 681 827 A1

$$Vsensor = Vin\_Tx * \frac{Tx\_Zgain}{Tx\_Zinput}$$

$$VouRX = fem\_sensor * \frac{Rx\_Zgain}{Rsensor}$$

RX block    SUPPY YP

P mirror

TX block

Vref_op

inp  apamp0  Y2
                out
 +
 -
inn    agnd
       gnd
              gainE=10000

Tx_Zinput

Tx_Zgain

V28

Vin_Tx

gnd

r=bias

r=bias

r=bias

r=bias

=32
238

I=15u

L12

sensor

V5

gnd

Vref_op

1

3

J557
ti082

2

+
-

4

gnd

titanus

5

Vout_Rx

Rx_Zgain

N mirror

gnd          gnd

Transductor/sensor

**Fig. 6A**

$$VoutRX = fem\_sensor * \frac{Rx\_Zgain}{Rsensor}$$

$$Vsensor = Vin\_Tx * \frac{Tx\_Zgain}{Tx\_Zinput}$$

RX block

SUPPY YP

P mirror

N mirror

Vref_op

[574
TLØ82

titanus

Vout_Rx

Rx_Zgain

gnd

sensor

R=32
RS

I=115u

L4

V4

gnd

supply

out

agnd

apampØ

inp

inn

Vref_op

Tx_Zgain

Tx_Zinput

V3

Vdc=Ø
gcm=Ø

gnd

Vin_Tx

TX block

Transducer/sensor

**Fig. 6B**

19

Fig. 7

Europäisches
Patentamt

European
Patent Office

Office européen
des brevets

# EUROPEAN SEARCH REPORT

**Application Number**

EP 25 18 8411

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2023 133216 A (BOCO INC) 22 September 2023 (2023-09-22) * figure 3 * * paragraphs [0001] - [0007], [0016], [0024] * * paragraphs [0035], [0038], [0044] - [0047], [0059] * | 1-8 | INV. B06B1/04 G01H11/00 A01M29/16 G01H11/02 G10K9/13 |
| A | CN 116 773 006 A (UNIV ZHEJIANG SCIENCE & TECH; CHINA NAT RICE RES INST) 19 September 2023 (2023-09-19) * the whole document * | 1-9 | |
| A | CN 116 734 987 A (ANHUI QINGNANG TECH CO LTD) 12 September 2023 (2023-09-12) * the whole document * | 1-9 | |
| A | VALERIO MAZZONI ET AL: "Disruption of the reproductive behaviour of Scaphoideus titanus by playback of vibrational signals", ENTOMOLOGIA EXPERIMENTALIS ET APPLICATA, KLUWER ACADEMIC PUBLISHERS, DORDRECHT, NL, vol. 133, no. 2, 25 September 2009 (2009-09-25), pages 174-185, XP071083754, ISSN: 0013-8703, DOI: 10.1111/J.1570-7458.2009.00911.X * the whole document * | 1-9 | TECHNICAL FIELDS SEARCHED (IPC) B06B G01H A01M G10K |
| A | US 4 566 085 A (WEINBERG STANLEY [US]) 21 January 1986 (1986-01-21) * the whole document * | 1-9 | |
| A | US 2019/137329 A1 (FEHRENBACH DOMINIK [DE] ET AL) 9 May 2019 (2019-05-09) * the whole document * | 1-9 | |

-/--

The present search report has been drawn up for all claims

| Place of search | Date of completion of the search | Examiner |
|---|---|---|
| The Hague | 10 November 2025 | Parmentier, Hélène |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 18 8411

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2010/175476 A1 (JACOB JOERN [DE] ET AL) 15 July 2010 (2010-07-15) * the whole document * ----- | 1-9 | |

TECHNICAL FIELDS
SEARCHED (IPC)

The present search report has been drawn up for all claims

| Place of search | Date of completion of the search | Examiner |
|---|---|---|
| The Hague | 10 November 2025 | Parmentier, Hélène |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

............................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 18 8411

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2025

| Patent document cited in search report | | Publication date | Patent family member(s) | | Publication date |
|---|---|---|---|---|---|
| JP 2023133216 | A | 22-09-2023 | NONE | | |
| CN 116773006 | A | 19-09-2023 | NONE | | |
| CN 116734987 | A | 12-09-2023 | NONE | | |
| US 4566085 | A | 21-01-1986 | JP | S58126732 A | 28-07-1983 |
| | | | US | 4566085 A | 21-01-1986 |
| US 2019137329 | A1 | 09-05-2019 | CN | 109425423 A | 05-03-2019 |
| | | | DE | 102017119714 A1 | 28-02-2019 |
| | | | US | 2019137329 A1 | 09-05-2019 |
| US 2010175476 | A1 | 15-07-2010 | CN | 101782424 A | 21-07-2010 |
| | | | EP | 2209110 A1 | 21-07-2010 |
| | | | PL | 2209110 T3 | 31-01-2014 |
| | | | US | 2010175476 A1 | 15-07-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 116773006
- US 20100175476 A
- JP 2023133216 A

### Non-patent literature cited in the description

- **ANNA ERIKSSON**. Mating disruption in Scaphoideus titanus Ball (Hemiptera: Cicadellidae) by vibrational signals. Doctoral thesis, University of Pisa
- **JERNEJ POLAJNAR** ; **ANNA ERIKSSON** ; **MARCO VALERIO** ; **ROSSI STACCONI** ; **ANDREA LUCCHI** ; **GIANFRANCO ANFORA** ; **META VIRANT-DOBER-LET** ; **VALERIO MAZZONI**. The process of pair formation mediated by substrate-borne vibrations in a small insect. Elsevier
- **MAZZONI, V** ; **LUCCHI, A**. Dieci anni di studi sulla comunicazione vibrazionale in Scaphoideus titanus: dalla teoria alla pratica. *Proceedings of the Italian National Academy of Entomology; Reviews*, vol. 62, 209-214
- Inexpensive Methods for Detecting and Reproducing Substrate-Borne Vibrations: Advantages and Limitations. **NIERI, R** ; **MICHAEL, S.C.J.** ; **PINTO, C.F** ; **URQUIZO, O.N** ; **APPEL, H.M** ; **COCROFT, R.B.** Biotremology: Physiology, Ecology, and Evolution. Animal Signals and Communication. 2022, vol. 8